# EUROPÄISCHE PATENTSCHRIFT

(11) **EP 2 024 211 B1**
(45) Veröffentlichungstag und Bekanntmachung des Hinweises auf die Patenterteilung: **12.07.2017**
(21) Anmeldenummer: 07725333.4
(22) Anmeldetag: 16.05.2007
(51) Int. Cl.: B60T 17/02, B60T 8/36, F16K 31/06

(54) **DRUCKLUFTVERSORGUNGSEINRICHTUNG FÜR EIN NUTZFAHRZEUG**
COMPRESSED AIR SUPPLY SYSTEM FOR A UTILITY VEHICLE
SYSTÈME D'ALIMENTATION EN AIR COMPRIMÉ POUR UN VÉHICULE UTILITAIRE

(30) Priorität: 19.05.2006 DE 102006023606
(43) Veröffentlichungstag der Anmeldung: 18.02.2009
(73) Patentinhaber: KNORR-BREMSE Systeme für Nutzfahrzeuge GmbH, 80809 München (DE)
(72) Erfinder: FRIES, Ansgar, 80993 München (DE); HILBERER, Eduard, 68766 Hockenheim (DE)
(74) Vertreter: Mattusch, Gundula
(86) Internationale Anmeldenummer: PCT/EP2007/004419
(87) Internationale Veröffentlichungsnummer: WO 2007/134795

(56) Entgegenhaltungen:
- EP-A1- 1 508 488
- WO-A-02/42136
- DE-A1- 3 233 545
- DE-A1- 3 923 882

## Beschreibung

Die vorliegende Erfindung betrifft eine Druckluftversorgungseinrichtung für ein Nutzfahrzeug, mit einem durch einen Antrieb über eine pneumatisch schaltbare Kupplung antreibbaren Kompressor und einem Ventil mit einer Magnetspule zum wahlweisen Zuführen von Druckluft zu einem Schalteingang der Kupplung.

Für Nutzfahrzeuge sind Druckluftversorgungseinrichtungen von zentraler Bedeutung. Insbesondere das Bremssystem eines pneumatisch gebremsten Nutzfahrzeugs benötigt Druckluft, ebenso wie zahlreiche weitere Verbraucher, beispielsweise Luftfederungen oder Liftachseinrichtungen. Die von der Druckluftversorgungseinrichtung aufzubereitende und zu verteilende Druckluft wird von einem Kompressor geliefert, der im Allgemeinen durch den Verbrennungsmotor des Nutzfahrzeugs angetrieben wird. Ein diesbezüglich gängiges Konzept sieht vor, den Kompressor über eine pneumatisch schaltbare Kupplung mit dem Verbrennungsmotor zu koppeln, wobei die Druckluft für die pneumatische Ansteuerung der Kupplung wiederum der Druckluftversorgungseinrichtung entnommen wird. Ein Beispiel für eine derartige Einrichtung ist in der DE 39 23 882 C2 angegeben.

Durch die Schaltbarkeit der Kupplung kann der Kompressorbetrieb bedarfsweise unterbrochen werden, beispielsweise während der Regenerationsphasen der Filtereinheit. Ebenso ist die Entkopplung des Kompressors von der Verbrennungsmaschine in Hinblick auf den Energiehaushalt des Nutzfahrzeugs gezielt einsetzbar.

Die Realisierung eines Konzepts mit schaltbarer Kupplung ist jedoch nicht in allen Aspekten unproblematisch. Insbesondere herrschen im Bereich des Verbrennungsmotors hohe Temperaturen, so dass die Schaltorgane, das heißt insbesondere pneumatisch oder/und elektrisch ansteuerbare Ventile in entsprechender Weise ausgelegt werden müssen, was mit entsprechend hohen Kosten verbunden ist.

Der Erfindung liegt die Aufgabe zugrunde, eine Druckluftversorgungseinrichtung mit elektrisch schaltbarer Kupplung auf der Grundlage eines kostengünstigen und besonders funktionsfähigen Konzeptes zur Verfügung zu stellen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass beim Öffnen beziehungsweise Offenhalten des Ventils in der Magnetspule während einer ersten Phase ein Anzugsstrom fließt und während einer zweiten Phase ein Haltestrom fließt, der geringer als der Anzugsstrom ist, wobei ein den Haltestrom hervorrufendes Treibersignal in der zweiten Phase pulsweitenmoduliert ist. Auf diese Weise kann die Leistungsaufnahme der Magnetspule kontrolliert abgesenkt werden, so dass die im Bereich des Kompressors und des Verbrennungsmotors vorliegenden hohen Temperaturen besser toleriert werden können. Die Amplitude des pulsweitenmodulierten Haltestroms kann niedriger sein als der Wert des Anzugsstroms, und durch die Pulsweitenmodulation mit beispielsweise einem Tastverhältnis von 50 % erfolgt eine weitere Absenkung der von der Spule abgegebenen Wärmeleistung. Der Anzugsstrom fließt über einen Zeitraum von beispielsweise 50 ms. Das Tastverhältnis während der plusweitenmodulierten Haltestromphase beträgt beispielsweise 0,8 bis 4 kHz.

Die Erfindung ist in vorteilhafter Weise dadurch weitergebildet, dass in einer dritten Phase ein Zwischenstrom fließt, der größer ist als der Haltestrom. Der Zwischenstrom dient der Sicherstellung des geöffneten Zustandes des Ventils. Kommt es in der Haltestromphase zu einer Absenkung des Magnetankers in Richtung seiner der geschlossenen Ventilstellung entsprechenden Stellung, so lässt sich durch einen geeigneten Zwischenstromimpuls der Anker wieder in eine der vollständig geöffneten Position entsprechende Stellung bringen. Der Zwischenstrom kann beispielsweise denselben Wert wie der Anzugsstrom haben, die Pulslänge kann ebenfalls beispielsweise 50 ms betragen.

Weiterhin kann vorgesehen sein, dass das Ventil im Bereich einer Frischluftzuführung zu dem Kompressor angeordnet ist. Im Bereich der Luftzuführung zu dem Kompressor, das heißt insbesondere an dessen Ansaugstutzen, herrschen vergleichsweise niedrige Temperaturen, so dass ein Ventil ohne besondere Berücksichtigung der Temperaturbeständigkeit eingesetzt werden kann. Zusätzlich ergibt sich durch die genannte Anordnung der Vorteil, dass zwischen dem Ventil und der schaltbaren Kupplung ein besonders kurzer Leitungsweg vorgesehen sein kann, was die Umschaltzeiten der Kupplung verkürzt. Dies ist insbesondere bei Anlagen von Vorteil, die eine häufige Umschaltung der Kupplung bewirken sollen.

In diesem Zusammenhang kann nützlicherweise vorgesehen sein, dass das das Ventil direkt an einem Gehäuse der Kupplung befestigt ist. Durch das Anflanschen des Ventils direkt am Kupplungsgehäuse kann jegliche Leitung zwischen dem Ventil und der Kupplung entfallen. Hierdurch ist ein Leitungsbruch ausgeschlossen, und ferner können kurze Schaltzeiten für die Kupplung sichergestellt werden.

Im Hinblick auf die Temperaturverhältnisse ist weiterhin von Vorteil, dass das Ventil im Bereich eines von der Lüftung des Verbrennungsmotors erzeugbaren Luftstroms angeordnet ist. Auf diese Weise wird das Ventil zusätzlich gekühlt. Insbesondere kann unter Ausnutzung der Fahrzeugelektronik die Lüftung des Verbrennungsmotors zugeschaltet werden, auch wenn dies die Temperatur des Verbrennungsmotors nicht erfordern würde. Die Lüftung dient dann hauptsächlich zur Kühlung des Ventils. Weitere Maßnahmen, die die Magnetspulentemperatur absenken sind ein guter Wärmeübergang von der Magnetspule zum Ventilgehäuse ein durch das Ventil verlaufender Kühlkanal, der insbesondere Ansaugluft des Kompressors führen kann, und/oder Kühlrippen am Ventilgehäuse.

Nützlicherweise ist vorgesehen, dass das Ventil ein elektrisch vorsteuerbares Pneumatikventil ist. Ein solches Ventil ermöglicht aufgrund des großen erzielbaren Luftdurchsatzes einen raschen Druckaufbau am Schaltorgan der Kupplung, so dass auch diese Maßnahme die Schaltgeschwindigkeit erhöht. Außerdem wird im Vergleich zu einem direkt elektrisch gesteuerten Ventil bei gleicher Schaltleistung eine geringere elektrische Leistung benötigt.

Die erfindungsgemäße Druckluftversorgungseinrichtung kann beispielsweise so ausgelegt sein, dass das Öffnen des Ventils durch elektrisches Signal von einem Druckschalter veranlasst wird, der auf einen Druck in einer Druckluftaufbereitungsanlage anspricht. Ein Grund für die Entkopplung von Verbrennungsmotor und Kompressor kann im Vorliegen eines ausreichenden Drucks innerhalb der Druckluftaufbereitungsanlage beziehungsweise im Bereich der Verbraucheranschlüsse bestehen. Folglich ist es nützlich, diesen Druck in ein elektrisches Signal umzusetzen, welches dann wiederum das Entkoppeln von Verbrennungsmotor und Kompressor bewirkt. Unter Vermittlung weiterer elektrischer oder elektronischer Bauteile wird auf der Grundlage des von dem Druckschalter erzeugten Signals das Treibersignal zur Ansteuerung der Magnetspule erzeugt.

In diesem Zusammenhang ist es nützlich, dass das Treibersignal von einer elektronischen Steuerung zur Verfügung gestellt wird, die druckabhängige Eingangssignale empfängt. Das Signal des Druckschalters wird somit zunächst einer elektronischen Steuerung zugeführt, die dann gegebenenfalls das Signal für das Ventil ausgibt. Dies hat den Vorteil, dass andere im Nutzfahrzeug vorliegende Parameter im Hinblick auf den Umschaltvorgang der Kupplung berücksichtigt werden können.

Beispielsweise kann vorgesehen sein, dass das elektrische Treibersignal von einer elektronischen Steuerung zur Verfügung gestellt wird, die temperaturabhängige Eingangssignale empfängt. So kann etwa die Temperatur im Bereich des Kompressors gemessen werden, um bei erhöhter Temperatur ein Entkoppeln des Kompressors vom Verbrennungsmotor zu bewirken.

Ebenso ist es möglich, dass das elektrische Treibersignal von einer elektronischen Steuerung zur Verfügung gestellt wird, die von der eingangs- und/oder ausgangsseitigen Drehzahl der Kupplung abhängige Eingangssignale empfängt. Auch eine Überwachung der Drehzahlen im Bereich der Kupplung kann nützlich sein, beispielsweise im Hinblick auf eine Fehlerdiagnose.

Gemäß einer besonders vorteilhaften Ausführungsform der Erfindung ist vorgesehen, dass die elektronische Steuerung in eine Druckluftaufbereitungsanlage integriert ist. Dies ist in der Praxis realisierbar, indem die herkömmliche elektronische Steuerung der Druckluftaufbereitungsanlage um die Funktionalität der Kupplungsansteuerung erweitert wird.

Es ist aber auch denkbar, dass die elektronische Steuerung über eine Schnittstelle mit einer in eine Druckluftaufbereitungsanlage integrierten Steuerung kommuniziert. Auf dieser Grundlage kann die herkömmliche elektronische Steuerung der Druckluftaufbereitungsanlage weitgehend unverändert bleiben, und die Schaltungsfunktionalität für die Kupplung kann extern zur Verfügung stehen.

Gemäß einer besonders vorteilhaften Ausführungsform der Erfindung ist vorgesehen, dass die dem Schalteingang über das Ventil zugeführte Druckluft einer Druckluftaufbereitungsanlage über ein Rückschlagventil entnommen wird. Um eine hohe Schaltgeschwindigkeit bei einem Pneumatikventil sicherzustellen, ist die Zuleitung zu einem Pneumatikventil vorzugsweise auf einem gewissen Druckniveau zu halten. Beim Öffnen des Ventils steht damit sogleich ein ausreichender Druck an, der dann über die kurze Leitung zur Kupplung auch rasch das Umschalten der Kupplung bewirken kann. Da die Druckluft zum Umschalten der Kupplung vorzugsweise einer Druckluftaufbereitungsanlage entnommen wird, die auch andere Verbraucher mit Druckluft versorgt, wird ein während des Belüftungsvorgangs ausreichendes Druckniveau in der zu dem Pneumatikventil führenden Leitung häufig durch einen zusätzlichen Druckvorratsbehälter sichergestellt. Dieser ist entbehrlich, wenn die dem Schalteingang über das Ventil zugeführte Druckluft über ein Rückschlagventil entnommen wird, denn dieses verhindert einen Druckabbau in der Druckzuführleitung aufgrund sonstiger Effekte im Bereich der Druckluftaufbereitungsanlage und der daran angeschlossenen Verbraucher.

Gemäß einer bevorzugten Ausführungsform kann vorgesehen sein, dass das Rückschlagventil in die Druckluftaufbereitungsanlage integriert ist. Ein wesentlicher Bestandteil der Druckluftaufbereitungsanlage ist ein mindestens eine Kreisschutzeinrichtung aufweisendes Ventilgehäuse, das die Einbindung eines weiteren Rückschlagventils durch die Bewältigung einer lediglich konstruktiven Aufgabe ohne weiteres ermöglicht. Ebenso ist aber auch die externe Anordnung des Rückschlagventils denkbar.

Die Erfindung betrifft weiterhin ein Verfahren zum Steuern einer erfindungsgemäßen Druckluftversorgungseinrichtung und ein Nutzfahrzeug mit einer erfindungsgemäßen Druckluftversorgungseinrichtung.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer erfindungsgemäßen Druckluftversorgungseinrichtung;
- Figur 2: eine schematische Darstellung einer erfindungsgemäßen Druckluftversorgungseinrichtung;
- Figur 3: eine schematische Darstellung einer erfindungsgemäßen Druckluftversorgungseinrichtung; und
- Figur 4: einen typischen Stromverlauf zum Öffnen beziehungsweise Offenhalten des die Kupplung ansteuernden Ventils.

Bei der nachfolgenden Beschreibung der Zeichnungen bezeichnen gleiche Bezugszeichen gleiche oder vergleichbare Komponenten.

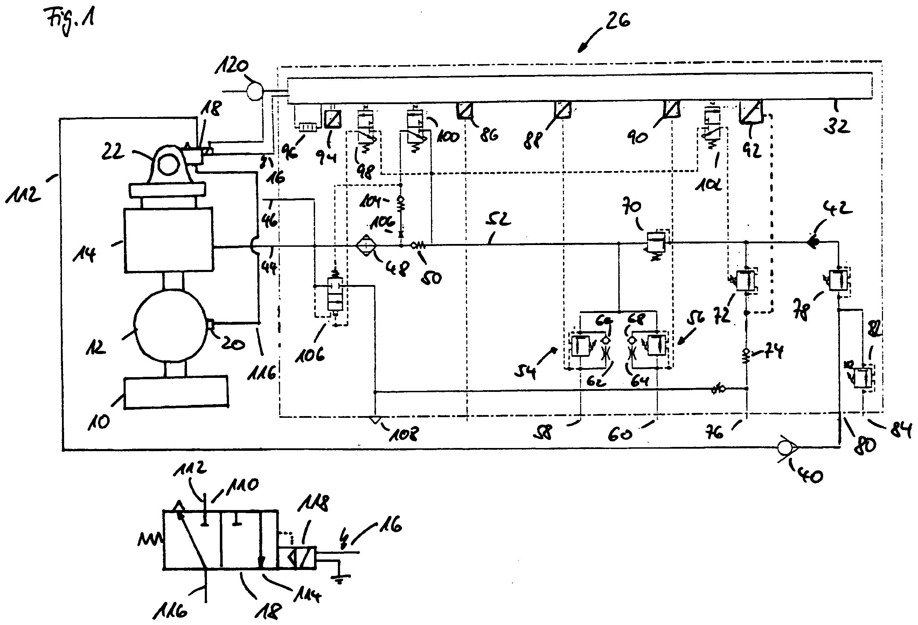

Figur 1 zeigt eine schematische Darstellung einer erfindungsgemäßen Druckluftversorgungseinrichtung. Es ist eine Druckluftaufbereitungsanlage 26 dargestellt. Mit dieser wird zugeführte Druckluft gefiltert und an verschiedene Druckluftverbraucher verteilt. Es ist ein Eingangsanschluss 44 vorgesehen, der mit einem außerhalb der Druckluftaufbereitungsanlage 26 vorgesehenen Kompressor 14 in Verbindung steht. Parallel zu dem Eingangsanschluss 44 ist ein Fremdbefüllungsanschluss 46 angeordnet. Die einem der Eingänge 44, 46 zugeführte Druckluft wird einer Filtereinheit 48 und von dort über ein Rückschlagventil 50 einer Hauptversorgungsleitung 52 zugeführt. An der Hauptversorgungsleitung 52 sind zwei Überströmventile 54, 56 parallel angeordnet, über die Anschlüsse 58, 60 für Betriebsbremskreise des Nutzfahrzeugs mit Druckluft beliefert werden. Parallel zu den Überströmventilen sind jeweils eine Drossel 62, 64 und ein Rückschlagventil 66, 68 angeordnet, wobei gemäß der vorliegenden Ausführungsform eine zur Strömung durch die Überströmventile 54, 56 parallele Strömung von der Hauptversorgungsleitung 52 zu den Anschlüssen 58, 60 der Betriebsbremskreise ermöglicht wird. Hierdurch kann insbesondere bei der Neubefüllung des Systems auch bei niedrigen Drücken in der Hauptversorgungsleitung 52 eine frühzeitige Befüllung der Betriebsbremskreisbehälter stattfinden. Ebenso ist es möglich, die Rückschlagventile unter Verzicht dieses Neubefüllungsvorteils in umgekehrter Richtung vorzusehen. Hierdurch wird dann eine Nachbefüllung von Nebenverbrauchern aus den Behältern der Betriebsbremskreise ermöglicht. In der Hauptversorgungsleitung 52 ist weiterhin ein Druckbegrenzer 70 vorgesehen. Auf der druckbegrenzten Seite des Druckbegrenzers 70 zweigen zwei weitere Leitungen parallel ab, wobei durch eine Leitung über ein Überströmventil 72 und ein Rückschlagventil 74 ein Anschluss 76 für die Feststellbremse und die Anhängerbremsanlage beliefert wird. Die andere Leitung beliefert über ein Rückschlagventil 42 und ein Überströmventil 78 einen Anschluss 80, der für die Betätigung der Kompressorkupplung 12 vorgesehen ist. Dem Überströmventil 78 ist ein weiteres Überströmventil 82 in einer abzweigenden Leitung nachgeordnet, über das ein weiterer Nebenverbraucheranschluss 84 beliefert wird.

Mit der elektronischer Steuerung 32 stehen mehrere Drucksensoren 86, 88, 90, 92 in Verbindung, wobei der Drucksensor 88 den Druck am Betriebsbremsanschluss 58, der Drucksensor 90 den Druck am Betriebsbremsanschluss 60 und der Drucksensor 62 den Druck unmittelbar hinter dem Überströmventil 72 für den Anschluss 76 von Feststellbremse und Anhänger misst. Mit der elektronischer Steuerung 32 stehen weiterhin ein Temperatursensor 94 und eine Heizung 96 in Verbindung. Weiterhin sind an die elektronische Steuerung 32 drei Magnetventile 98, 100, 102 angeschlossen, das Druckreglermagnetventil 98, das Regenerationsmagnetventil 100 und ein Magnetventil 102 zur Druckzusatzsteuerung des Überströmventils 72. Die Magnetventile 78, 100, 102 sind als 3/2-Wegeventile ausgelegt und alle im stromlosen Zustand geschlossen. Im geschlossen Zustand steht der Druck der Hauptversorgungsleitung 52 an den Eingängen der Magnetventile 98, 100, 102 an. Zur Einleitung eines Regenerationsvorganges ist es erforderlich das Regenerationsmagnetventil 100 und das Druckreglermagnetventil 98 zu bestromen und somit in ihren nicht dargestellten Zustand zu überführen. Dies hat zur Folge, dass den Betriebsbremsbehältern über die Hauptversorgungsleitung 52 trockene Druckluft entnommen wird, die dann unter Umgehung des Rückschlagventils 50 über das Regenerationsmagnetventil 100 ein weiteres Rückschlagventil 104 und eine Drossel 106, die Filtereinheit 48 in umgekehrter Richtung durchströmt, um dann über ein aufgrund der Umschaltung des Druckreglermagnetventils 98 in seine nicht dargestellte Schaltstellung umgeschaltetes Ablassventil 106 zu einem Ablass 108 und von dort in die Atmosphäre abzuströmen. Außerhalb der Druckluftaufbereitungsanlage 26 sind der bereits erwähnte Kompressor 14, ein Verbrennungsmotor 10 und eine dem Kompressor 14 mit dem Verbrennungsmotor 10 verbindende schaltbare Kupplung 12 dargestellt. Der Kompressor 14 hat einen Ansaugstutzen 22, über den die zu komprimierende Luft angesaugt wird. Im Bereich dieser Luftzuführung ist ein 3/2-Wegeventil 18 angeordnet, das vorliegend, wie nochmals separat dargestellt, als elektrisch vorgesteuertes Pneumatikventil ausgelegt ist. Das Pneumatikventil 18 hat einen Eingangsanschluss 110, an dem eine zu dem Kupplungsanschluss 80 führende Leitung 112 angeschlossen ist. In dieser Leitung 112 ist ein Rückschlagventil 40 angeordnet, dass eine Strömung vom Kupplungsanschluss 80 zu dem Ventil 18 zulässt und eine umgekehrte Strömung unterbindet. Das Ventil 18 hat einen Ausgangsanschluss, der über eine Leitung 116 mit einem Schalteingang 20 der Kupplung 12 gekoppelt ist. Über einen elektrischen Eingang 118 zum Zwecke der Zuführung eines Signals 16 ist das Ventil mit der elektronischen Steuerung 32 der Druckluftaufbereitungsanlage 26 sowie mit Masse, die an einem Zentralstecker 120 abgegriffen wird, verbunden.

Die Druckluftversorgungseinrichtung gemäß Figur 1 arbeitet im Hinblick auf die schaltbare Kupplung 12 wie folgt. Soll die im nicht druckangesteuerten Zustand geschlossene Kupplung 12 geöffnet werden, beispielsweise im Falle einer bereits erwähnten Regeneration, so gibt die elektronische Steuerung 32 ein Ausgangssignal 16 an das elektrisch vorgesteuerte Pneumatikventil 18. Das Ventil 18 öffnet, und es stellt auf diese Weise eine Verbindung zwischen dem Kupplungsanschluss 80 der Druckluftaufbereitungsanlage 26 und dem Schalteingang 20 der Kupplung 12 her. Durch das Belüften des Schalteingangs 20 wird die Kupplung 12 geöffnet und der Kompressor 14 zum Stehen gebracht. Das hierzu erforderliche Öffnen des Ventils 18 erfolgt mit einem hohen Anzugsstrom und einem demgegenüber abgesenkten pulsweitenmodulierten Haltestrom. Während der Haltestromphase werden Zwischenpulse zugeführt, die einen eventuell abgesenkten Anker wieder in seine Endlage bringen. Zum Schließen der Kupplung 12 wird die Bestromung des elektrischen Eingangs 118 wieder ausgesetzt, so dass der Schalteingang 20 entlüftet wird. Durch die Rückschlagventile 40, 42 wird eine kurze Schaltzeit sichergestellt. Das Rückschlagventil 42 verhindert eine Rückströmung von Druckluft aus der Leitung 112 in die Richtung der Abzweigungen der Betriebsbremsanschlüsse 58, 60 und des Anschlusses für die Feststellbremse sowie den Anhänger. Das Rückschlagventil 40 verhindert zusätzlich eine Rückströmung aus der Leitung 112 zu dem Nebenverbraucheranschluss 84. Je nach der Auslegung der Anlage und den Bedürfnissen im Hinblick auf die Schaltzeit kann eines der Rückschlagventile 40, 42 ausreichend sein. Die Rückschlagventile 40, 42 stellen somit sicher, dass in der intakten Leitung 112 stets ein gewisses Druckniveau aufrechterhalten werden kann, so dass beim Umschalten des Ventils 18 ein rascher Druckaufbau am Schalteingang 20 des Kompressors 12 sichergestellt ist. Ein zusätzlicher Vorratsbehälter im Bereich der Leitung 112, mit dem man ebenfalls die Aufrechterhaltung eines solchen Druckniveaus sicherstellen könnte, ist somit entbehrlich. Zwischen dem Anschluss 80 und dem Rückschlagventil 40 können auch weitere Verbraucher angeschlossen sein, zum Beispiel eine Abgasreinigung, eine Motorbremse und/oder eine Getriebeansteuerung.

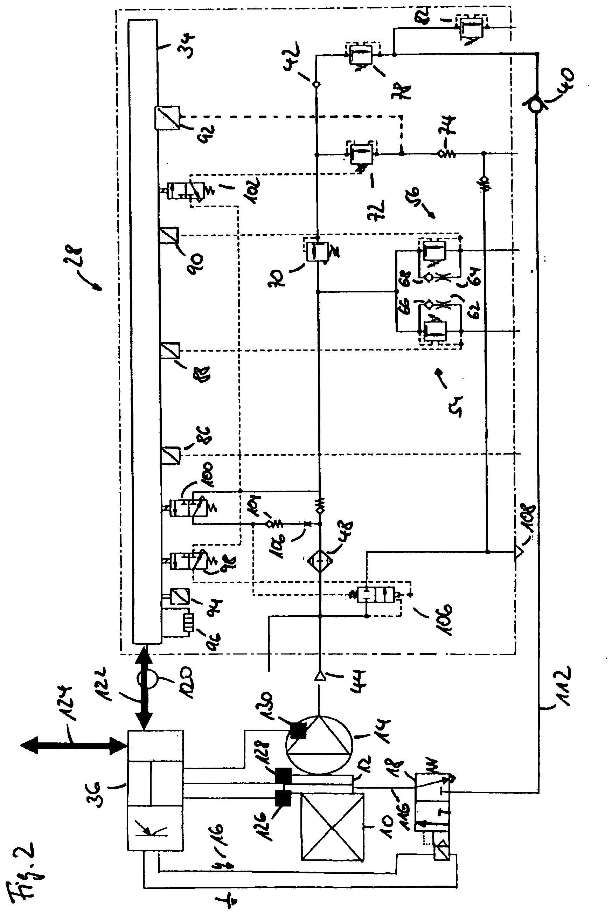

Figur 2 zeigt eine schematische Darstellung einer erfindungsgemäßen Druckluftversorgungseinrichtung. Zahlreiche Eigenschaften der Ausführungsform gemäß Figur 2 sind identisch zur Ausführungsform gemäß Figur 1, beispielsweise auch die bevorzugte Anordnung des elektrisch vorgesteuerten Pneumatikventils 18 im Bereich des Lufteinlasses des Kompressors 14, auch wenn dies hier nicht dargestellt ist. Im Unterschied zur Ausführungsform gemäß Figur 1 ist bei der Ausführungsform gemäß Figur 2 eine externe Steuerung 36 zusätzlich zu der elektronischen Steuerung 34 in der Druckluftaufbereitungsanlage 28 vorgesehen. Die externe Steuerung 36 ist geeignet, mit der internen Steuerung 34 über eine Schnittstelle 122, die vorzugsweise von dem Zentralstecker 120 zur Verfügung gestellt wird, zu kommunizieren. Ebenfalls ist eine Schnittstelle 124 zu sonstigen Fahrzeugkomponenten vorgesehen, beispielsweise über einen CAN-Bus zu einem Fahrzeugführungsrechner. Baulich können die Schnittstellen 122, 124 vereinigt sein. Es ist in Figur 2 weiterhin gezeigt, dass ein Drehzahlsensor 126 auf der Eingangseite der Kupplung 12 und ein weiterer Drehzahlsensor 128 auf der Ausgangsseite der Kupplung 12 angeordnet sein können. Weiterhin ist ein Temperatursensor 130 am Kompressor 14 vorgesehen. Die Signale der Sensoren 126, 128, 130 werden der externen Steuerung 36 zugeführt und von dieser im Hinblick auf die Ansteuerung des Ventils berücksichtigt, auf andere Weise verwertet, beispielsweise im Hinblick auf eine Funktionsüberwachung, und/oder in ursprünglicher oder verarbeiteter Form über die Schnittstellen 122, 124 weitergegeben.

Die nützliche Ermittlung der Drehzahlen und der Temperatur kann auch im Zusammenhang mit der Ausführungsform gemäß Figur 1 vorgesehen sein, auch wenn dies dort nicht dargestellt ist. Die entsprechenden Daten werden dann der internen Steuerung 32 der Druckluftaufbereitungsanlage 26 zugeführt.

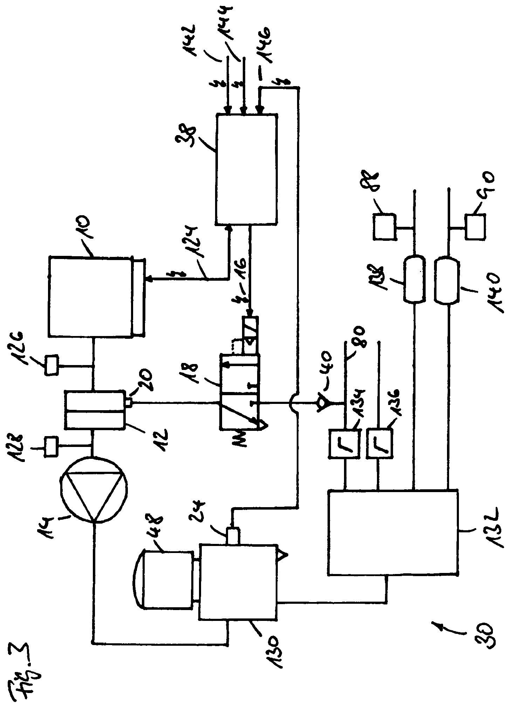

Figur 3 zeigt eine schematische Darstellung einer erfindungsgemäßen Druckluftversorgungseinrichtung. Die hier dargestellte Druckluftversorgungseinrichtung ist in der Form mehrerer verteilter Einzelbaugruppen dargestellt. Insbesondere sind ein Druckregler 130 mit aufgesetzter Filtereinheit 48, ein Mehrkreisschutzventil 132, Druckbegrenzer 134, 136 und eine elektronische Steuerung 38 dargestellt. Die Komponenten können real in der beschriebenen Weise verteilt sein. Die verteilte Darstellung kann aber auch im Sinne einer funktionalen Aufteilung verstanden werden, wobei real Druckregler, Mehrkreisschutzventil, die Druckbegrenzer und/oder die elektronische Steuerung integriert realisiert sind, beispielsweise wie im Zusammenhang mit den Figuren 1 und 2 dargestellt.

Bei der Ausführungsform gemäß Figur 3 ist wiederum ein Kompressor 14 über eine schaltbare Kupplung 12 mit einem Verbrennungsmotor 10 gekoppelt. Der Kompressor 14 liefert Druckluft an den Druckregler 130, von wo die Druckluft an das Mehrkreisschutzventil 132 weitergegeben wird. Das Mehrkreisschutzventil 132 verteilt die Druckluft auf die Behälter 138, 140 und sonstige Anschlüsse, von denen einer als ein mit einem Druckbegrenzer 136 versehener Anschluss dargestellt ist. Ein weiterer Anschluss ist der Kupplungsanschluss 80, ebenfalls über einen Druckbegrenzer 134 beliefert. Von dem Kupplungsanschluss 80 wird über das die Schaltzeiten sicherstellende Rückschlagventil 40 Druckluft an das elektrisch vorgesteuerte Pneumatikventil 18 geliefert. Die Ansteuerung des Ventils 18 erfolgt durch die elektronische Steuerung 38, die über die Schnittstelle 124 ebenfalls mit dem Verbrennungsmotor beziehungsweise mit einer Motorsteuerung kommuniziert. Die elektronische Steuerung 38 weist mehrere Eingänge 142, 144, 146 auf. Die Eingänge 142, 144 symbolisieren die Möglichkeit, der Steuerung 38 Temperatur-, Druck- und/oder Drehzahlinformation zuzuführen, beispielsweise gemessen durch die Drucksensoren 88, 90 der Betriebsbremskreise, und/oder durch die Drehzahlsensoren 126, 128 an der Eingangsseite und der Ausgangsseite der Kupplung 12. An dem Druckregler 130 ist ein Druckschalter 24 vorgesehen. Dieser steht mit dem Eingang 146 der elektronischen Steuerung 38 in Verbindung. Somit kann der elektronischen Steuerung 38 ein druckabhängiges elektrisches Signal zugeführt werden.

Die Druckluftversorgungseinrichtung gemäß Figur 3 arbeitet wie folgt. Auf der Grundlage der über die Eingänge 142, 144, 146 und die Schnittstelle 124 zur Verfügung gestellten Informationen kann die elektronische Steuerung 38 ein elektrisches Signal 16 an das Ventil 18 liefern, so dass dieses umschaltet und die Kupplung 12 aufgrund der Belüftung des Schalteingangs 20 öffnet. Die Entscheidung zur Ausgabe des Signals 16 kann nun auf der Grundlage erfolgen, dass durch Sensoren gemessene Drücke Temperaturen oder Drehzahlen ein Öffnen der Kupplung 12 erforderlich machen. Parallel hierzu kann das Öffnen der Kupplung aber auch auf der Grundlage des von dem Druckschalter 24 ausgegebenen Signals erfolgen. Erfahren Komponenten der in Figur 3 dargestellten Ausführungsform einen Defekt, so dass beispielsweise die Druckniveaus in den Betriebsbremskreisen nicht mehr zuverlässig gemessen werden, kann durch die Anwesenheit des Druckschalters 24 und der hierdurch ermöglichten Schaltfunktionalität dennoch ein Öffnen der Kupplung 12 erfolgen, was deren Zerstörung aufgrund der geschilderten Defekte verhindert.

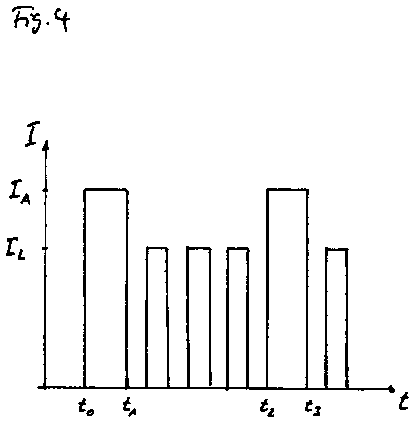

Figur 4 zeigt einen typischen Stromverlauf zum Öffnen beziehungsweise Offenhalten des die Kupplung ansteuernden Ventils. In dem Diagramm ist der durch die Spule fließende Strom I gegen die Zeit t aufgetragen. Zu einem Zeitpunkt t₀ wird die Spule durch Bereitstellen eines Anzugsimpulses der Stromstärke I_{A} geöffnet. Ab dem Zeitpunkt t₁ kann in die Haltestromphase eingetreten werden, wobei hier einzelne Stromimpulse mit der Amplitude I_{L} und einem hier beispielhaft dargestellten Tastverhältnis von 50 % zugeführt werden. Zu einem Zeitpunkt t₂ kann ein Zwischenpuls zur Verfügung gestellt werden, der beispielsweise wiederum einen Stromfluss von I_{A} durch die Magnetspule zur Folge hat. Im Anschluss an den Zwischenpuls zum Zeitpunkt t₃ folgt wieder eine pulsweitenmodulierte Haltestromphase. Durch die Pulsweitenmodulation ist der zeitlich gemittelte Stromfluss durch die Spule nochmals niedriger als die Haltestromamplitude I_{L}. Die Dauer des Anzugsimpulses und der Zwischenimpulse kann beispielsweise im Bereich von 50 ms liegen. Die Frequenz der Pulsweitenmodulation liegt beispielsweise im Bereich von 0,8 bis 4 kHz. Neben der Absenkung des Haltestroms, die die Temperatur im Bereich des die Kupplung ansteuernden Ventils verringert, stehen weitere Maßnahmen zur Verfügung, die die Temperaturverhältnisse begünstigen. Beispielsweise kann während der Haltestromphase der Lüfter des Verbrennungsmotors zugeschaltet werden. Weiterhin können durch die Auslegung des Ventils selbst und durch dessen Anordnung im Bereich des Kompressors beziehungsweise der Kupplung vorteilhafte Temperatureffekte erzielt werden. Beispielsweise kann die Magnetspule thermisch gut an das Ventilgehäuse gekoppelt werden, das Ventilgehäuse kann mit Kühlrippen ausgestattet werden, das Ventilgehäuse kann eine Kühlöffnung aufweisen, die vorzugsweise von Kompressoransaugluft, das heißt häufig kühler Frischluft, durchströmt wird, und das Ventil kann im Bereich des Ansaugstutzens des Kompressors angeordnet werden, so dass es außen von Frischluft umströmt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Antrieb
- 12: Kupplung
- 14: Kompressor
- 16: Signal
- 18: Ventil
- 20: Schalteingang
- 22: Frischluftzuführung
- 24: Druckschalter
- 26: Druckluftaufbereitungsanlage
- 28: Druckluftaufbereitungsanlage
- 30: Druckluftaufbereitungsanlage
- 32: elektronische Steuerung
- 34: elektronische Steuerung
- 36: elektronische Steuerung
- 38: elektronische Steuerung
- 40: Rückschlagventil
- 42: Rückschlagventil
- 44: Eingangsanschluss
- 46: Fremdbefüllungsanschluss
- 48: Filtereinheit
- 50: Rückschlagventil
- 52: Hauptversorgungsleitung
- 54: Überströmventil
- 56: Überströmventil
- 58: Anschluss Betriebsbremskreis
- 60: Anschluss Betriebsbremskreis
- 62: Drossel
- 64: Drossel
- 66: Rückschlagventil
- 68: Rückschlagventil
- 70: Druckbegrenzer
- 72: Überströmventil
- 74: Rückschlagventil
- 76: Anschluss Feststellbremse/Anhänger
- 78: Überströmventil
- 80: Anschluss Kupplung
- 82: Überströmventil
- 84: Anschluss Nebenverbraucher
- 86: Drucksensor
- 88: Drucksensor
- 90: Drucksensor
- 92: Drucksensor
- 94: Temperatursensor
- 96: Heizung
- 98: Magnetventil
- 100: Magnetventil
- 102: Magnetventil
- 104: Rückschlagventil
- 106: Ablassventil
- 108: Ablass
- 110: Eingangsanschluss
- 112: Leitung
- 114: Ausgangsanschluss
- 116: Leitung
- 118: elektrischer Eingang
- 120: Zentralstecker
- 122: Schnittstelle
- 124: Schnittstelle
- 126: Drehzahlsensor
- 128: Drehzahlsensor
- 130: Druckregler
- 132: Mehrkreisschutzventil
- 134: Druckbegrenzer
- 136: Druckbegrenzer
- 138: Behälter
- 140: Behälter
- 142: Eingang
- 144: Eingang
- 146: Eingang

## Patentansprüche

1. Druckluftversorgungseinrichtung für ein Nutzfahrzeug, mit
- einem durch einen Antrieb (10) über eine pneumatisch schaltbare Kupplung (12) antreibbaren Kompressor (14) und
- einem Ventil (18) mit einer Magnetspule zum wahlweisen Zuführen von Druckluft zu einem Schalteingang (20) der Kupplung,
**dadurch gekennzeichnet,**
- **dass** beim Öffnen beziehungsweise Offenhalten des Ventils (18) in der Magnetspule während einer ersten Phase ein Anzugsstrom fließt und während einer zweiten Phase ein Haltestrom fließt, der geringer als der Anzugsstrom ist, wobei ein den Haltestrom hervorrufendes Treibersignal in der zweiten Phase pulsweitenmoduliert ist, und
- **dass** das Ventil (18) im Bereich einer Frischluftzuführung (22) zu dem Kompressor (14) angeordnet ist.

2. Druckluftversorgungseinrichtung nach Anspruch 1, **dadurch gekennzeichnet, dass** in einer dritten Phase ein Zwischenstrom fließt, der größer ist als der Haltestrom.

3. Druckluftversorgungseinrichtung nach einem der vorhergehenden Ansprüche, **dadurch gekennzeichnet, dass** das Ventil (18) direkt an einem Gehäuse der Kupplung (12) befestigt ist.

4. Druckluftversorgungseinrichtung nach einem der vorhergehenden Ansprüche, **dadurch gekenntzeichnet,** dass das Ventil (18) im Bereich eines von der Lüftung des Verbrennungsmotors (10) erzeugbaren Luftstroms angeordnet ist.

5. Druckluftversorgungseinrichtung nach einem der vorhergehenden Ansprüche, **dadurch gekennzeichnet, dass** das Ventil (18) ein elektrisch vorsteuerbares Pneumatikventil ist.

6. Druckluftversorgungseinrichtung nach einem der vorhergehenden Ansprüche, **dadurch gekennzeichnet, dass** das Öffnen des Ventils durch ein elektrisches Signal (16) von einem Druckschalter (24) veranlasst wird, der auf einen Druck in einer Druckluftaufbereitungsanlage (26, 28, 30) anspricht.

7. Druckluftversorgungseinrichtung nach einem der vorhergehenden Ansprüche, **dadurch gekennzeichnet, dass** das Treibersignal von einer elektronischen Steuerung (32, 34, 36, 38) zur Verfügung gestellt wird, die druckabhängige Eingangssignale empfängt.

8. Druckluftversorgungseinrichtung nach einem der vorhergehenden Ansprüche, **dadurch gekennzeichnet, dass** das Treibersignal von einer elektronischen Steuerung (32, 36, 34, 38) zur Verfügung gestellt wird, die temperaturabhängige Eingangssignale empfängt.

9. Druckluftversorgungseinrichtung nach einem der vorhergehenden Ansprüche, **dadurch gekennzeichnet, dass** das Treibersignal von einer elektronischen Steuerung (32, 36, 34, 38) zur Verfügung gestellt wird, die von der eingangs- und/oder ausgangsseitigen Drehzahl der Kupplung abhängige Eingangssignale empfängt.

10. Druckluftversorgungseinrichtung nach einem der Ansprüche 7 bis 9, **dadurch gekennzeichnet, dass** die elektronische Steuerung (32) in eine Druckluftaufbereitungsanlage (26) integriert ist.

11. Druckluftversorgungseinrichtung nach einem der Ansprüche 7 bis 9, **dadurch gekennzeichnet, dass** die elektronische Steuerung (36) über eine Schnittstelle mit einer in eine Druckluftaufbereitungsanlage (28) integrierten Steuerung (34) kommuniziert.

12. Druckluftversorgungseinrichtung nach einem der vorhergehenden Ansprüche, **dadurch gekennzeichnet, dass** dem Schalteingang (20) über das Ventil (18) zugeführte Druckluft einer Druckluftaufbereitungsanlage (26, 28, 30) über ein Rückschlagventil (40, 42) entnommen wird.

13. Druckluftversorgungseinrichtung nach Anspruch 12, **dadurch gekennzeichnet, dass** das Rückschlagventil (42) in die Druckluftaufbereitungsanlage (26, 28, 30) integriert ist.

14. Verfahren zum Steuern einer Druckluftversorgungseinrichtung nach einem der vorhergehenden Ansprüche.

15. Nutzfahrzeug mit einer Druckluftversorgungseinrichtung nach einem der Ansprüche 1 bis 13.

## Claims

1. Compressed air supply system for a utility vehicle, having:
- a compressor (14) that can be driven by a drive (10) by means of a pneumatically switchable clutch (12), and
- a valve (18) with a magnetic coil for selectively supplying compressed air to a switch input (20) of the clutch,
**characterised in that**
- when opening and / or keeping the valve (18) open in the magnetic coil during a first phase a pull-in current flows and during a second phase a holding current flows, which is weaker than the pull-in current, wherein a driver signal bringing about the holding current is pulse-width-modulated in the second phase, and
- the valve (18) is arranged in the region of a fresh air supply (22) to the compressor (14).

2. Compressed air supply system according to claim 1, **characterised in that** in a third phase, an intermediate current flows, which is greater than the holding current.

3. Compressed air supply system according to one of the preceding claims, **characterised in that** the valve (18) is fastened directly to a housing of the clutch (12).

4. Compressed air supply system according to one of the preceding claims, **characterised in that** the valve (18) is arranged in the region of an air stream that can be generated by the ventilation of the internal combustion engine (10).

5. Compressed air supply system according to one of the preceding claims, **characterised in that** the valve (18) is an electrically precontrolled pneumatic valve.

6. Compressed air supply system according to one of the preceding claims, **characterised in that** the opening of the valve is triggered by an electrical signal (16) from a pressure switch (24), which reacts to a pressure in a compressed air processing system (26, 28, 30).

7. Compressed air supply system according to one of the preceding claims, **characterised in that** the driver signal is made available by an electronic controller (32, 34, 36, 38), which receives pressure-dependent input signals.

8. Compressed air supply system according to one of the preceding claims, **characterised in that** the driver signal is made available by an electronic controller (32, 36, 34, 38), which receives temperature-dependent input signals.

9. Compressed air supply system according to one of the preceding claims, **characterised in that** the driver signal is made available by an electronic controller (32, 36, 34, 38), which receives input signals dependent on the speed at the input and / or output side of the clutch.

10. Compressed air supply system according to one of claims 7 to 9, **characterised in that** the electronic controller (32) is integrated into a compressed air processing system (26).

11. Compressed air supply system according to one of claims 7 to 9, **characterised in that** the electronic controller (36) communicates over an interface with a controller (34) integrated into a compressed air processing system (28).

12. Compressed air supply system according to one of the preceding claims, **characterised in that** compressed air supplied to the switch input (20) via the valve (18) is extracted from a compressed air processing system (26, 28, 30) via a non-return valve (40, 42).

13. Compressed air supply system according to claim 12, **characterised in that** the non-return valve (42) is integrated into the compressed air processing system (26, 28, 30).

14. Method for controlling a compressed air supply system according to one of the preceding claims.

15. Utility vehicle having a compressed air supply system according to one of claims 1 to 13.

## Revendications

1. Dispositif d'alimentation en air comprimé pour un véhicule utilitaire, comprenant
- un compresseur (14) pouvant être entraîné par un entraînement (10), par l'intermédiaire d'un accouplement (12) manoeuvrable pneumatiquement et
- une vanne (18) ayant une bobine d'électroaimant pour apporter au choix de l'air comprimé à une entrée (20) de manoeuvre de l'accouplement,
**caractérisé**
- **en ce que**, lorsque la vanne (18) est ouverte ou est maintenue ouverte, il passe, dans la bobine de l'électroaimant, pendant une première phase, un courant de démarrage et pendant une deuxième phase, un courant de maintien, qui est moins intense que le courant de démarrage, dans lequel un signal d'attaque, provoquant le courant de maintien, est modulé en largeur d'impulsion dans la deuxième phase et
- **en ce que** la vanne (18) est montée dans la partie d'un apport (22) d'air frais au compresseur (14).

2. Dispositif d'alimentation en air comprimé suivant la revendication 1, **caractérisé en ce que**, dans une troisième phase, il passe un courant intermédiaire, qui est plus intense que le courant de maintien.

3. Dispositif d'alimentation en air comprimé suivant l'une des revendications précédentes, **caractérisé en ce que** la vanne (18) est fixée directement à un carter de l'accouplement (12).

4. Dispositif d'alimentation en air comprimé suivant l'une des revendications précédentes, **caractérisé en ce que** la vanne (18) est montée dans la partie d'un courant d'air pouvant être produit par la ventilation du moteur (10) à combustion interne.

5. Dispositif d'alimentation en air comprimé suivant l'une des revendications précédentes, **caractérisé en ce que** la vanne (18) est une vanne pneumatique pilotable électriquement.

6. Dispositif d'alimentation en air comprimé suivant l'une des revendications précédentes, **caractérisé en ce que** l'ouverture de la vanne est provoquée par un signal (16) électrique d'un interrupteur (24) manométrique, qui est sensible à une pression dans un système (26, 28, 30) de conditionnement d'air comprimé.

7. Dispositif d'alimentation en air comprimé suivant l'une des revendications précédentes, **caractérisé en ce que** le signal d'attaque est mis à disposition par une commande (32, 34, 36, 38) électronique, qui reçoit des signaux d'entrée, qui dépendent de la pression.

8. Dispositif d'alimentation en air comprimé suivant l'une des revendications précédentes, **caractérisé en ce que** le signal d'attaque est mis à disposition par une commande (32, 34, 36, 38) électronique, qui reçoit des signaux d'entrée, qui dépendent de la température.

9. Dispositif d'alimentation en air comprimé suivant l'une des revendications précédentes, **caractérisé en ce que** le signal d'attaque est mis à disposition par une commande (32, 34, 36, 38) électronique, qui reçoit des signaux d'entrée, qui dépendent de la vitesse de rotation du côté de l'entrée et/ou du côté de la sortie de l'accouplement.

10. Dispositif d'alimentation en air comprimé suivant l'une des revendications 7 à 9, **caractérisé en ce que** la commande (32) électronique est intégrée dans un système (26) de conditionnement d'air comprimé.

11. Dispositif d'alimentation en air comprimé suivant l'une des revendications 7 à 9, **caractérisé en ce que** la commande (36) électronique communique par une interface avec une commande (34) intégrée dans un système (28) de conditionnement d'air comprimé.

12. Dispositif d'alimentation en air comprimé suivant l'une des revendications précédentes, **caractérisé en ce qu'**il peut être prélevé, par l'intermédiaire d'un clapet anti-retour (40, 42), de l'air comprimé d'un système (26, 28, 30) de conditionnement d'air comprimé apporté à l'entrée (20) de manoeuvre par la vanne (18).

13. Dispositif d'alimentation en air comprimé suivant la revendication 12, **caractérisé en ce que** le clapet anti-retour (42) est intégré dans le système (26, 28, 30) de conditionnement d'air comprimé.

14. Procédé de commande d'un dispositif d'alimentation d'air comprimé suivant l'une des revendications précédentes.

15. Véhicule utilitaire ayant un dispositif d'alimentation en air comprimé suivant l'une des revendications 1 à 13.
